# EUROPEAN PATENT SPECIFICATION

(11) **EP 0 616 761 B1**
(45) Date of publication and mention of the grant of the patent: **31.05.2000**
(21) Application number: 94200646.1
(22) Date of filing: 14.03.1994
(51) Int. Cl.: A01D 80/02, A01D 80/00

(54) **A construction for processing crop residues lying on the field**
Vorrichtung zur Bearbeitung am Boden liegenden Erntegutes
Dispositif pour travailler des végétaux se trouvant sur le sol

(30) Priority: 22.03.1993 NL 9300496
(43) Date of publication of application: 28.09.1994
(73) Proprietor: MAASLAND N.V., 3155 PD Maasland (NL)
(72) Inventor: Bom, Cornelis Johannes Gerardus, NL-3181 VC Rozenburg (NL); van den Engel, Alfonsus Jacobus, NL-3137 KC Vlaardingen (NL)
(74) Representative: Corten, Maurice Jean F.M.

(56) References cited:
- EP-A- 0 097 801
- DE-A- 3 914 482
- DE-B- 1 219 719
- FR-A- 1 592 533
- FR-A- 2 340 682
- GB-A- 1 185 506
- GB-A- 1 217 392
- GB-A- 191 219 166

## Description

The present invention relates to a hay making machine, comprising at least one carrier element which is rotatably drivable about an at least predominantly upwardly directed shaft and to which working members are attached via arms, each working member being provided with a connecting member which is secured to an arm section with the aid of a clamping member, wherein the clamping member is provided with a projection which in cooperation with the connecting member of a working member counteracts in one direction any displacement of the working member transversely to the direction of the clamping force.

Such a construction is, for example, disclosed in the British patent specification 1 217 392. In the known construction the position of a working member can be adjustable in a number of positions by using special formed clamping blocks of different construction. By replacing one clamping block by another clamping block the position of a tine can be changed. According to a further embodiment described in the same patent specification the clamping block is omitted, so that there is no fixed angle of inclination of a working element. A disadvantage of these solutions is, that this changing of the tine position is complicated and time consuming.

The present invention has for its object to provide a different and simple construction for adjustment of the tines. According to the invention, a hay making machine has the features set out in Claim 1.

In a further embodiment, it is advantageous, according to the invention, that the connecting element is locked with the aid of turned-over portions which bear on the leading and the trailing edges of an arm section. In accordance with the invention, the apertures in the connecting element may be provided such that replacing of it, about an upwardly directed axis and through 180°, doubles the number of possible positions of a working member, determined by the number of apertures.

For a better understanding of the invention and to show how the same may be carried into effect, reference will now be made, by way of example, to the accompanying drawings, in which:
Figure 1 is a plan view of a working member which, in accordance with the invention, is attached to the arm of a hay making implement;
Figure 2 is a view taken in the direction of the arrow II in Figure 1;
Figure 3 is a plan view taken in the direction of the arrow III in Figure 1, and
Figure 4 is a cross-sectional view taken on the line IV - IV in Figure 1.

The invention is in no way limited to the embodiments depicted and described here; they are only illustrative of the inventive idea.

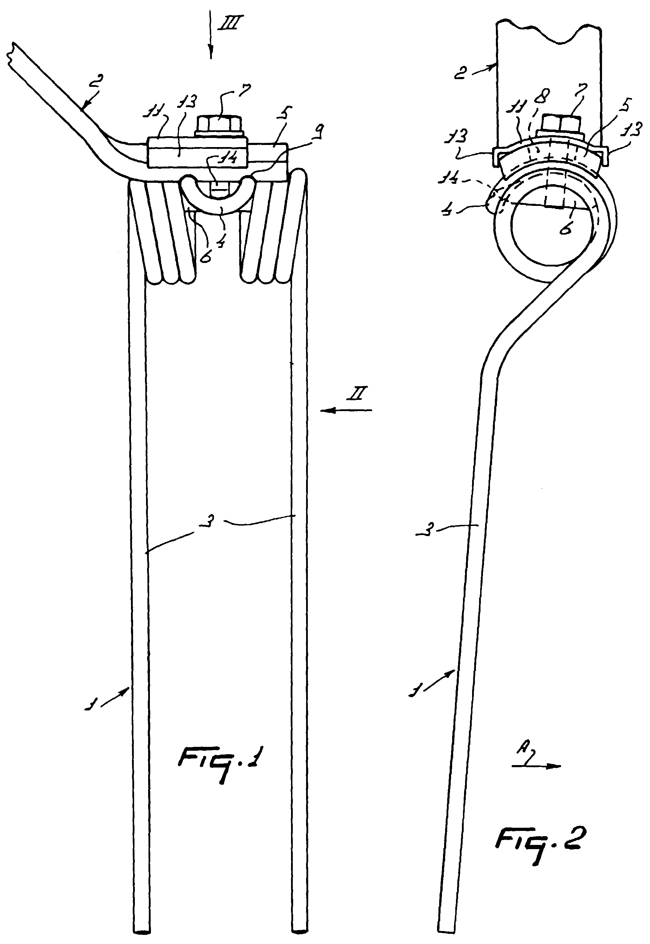

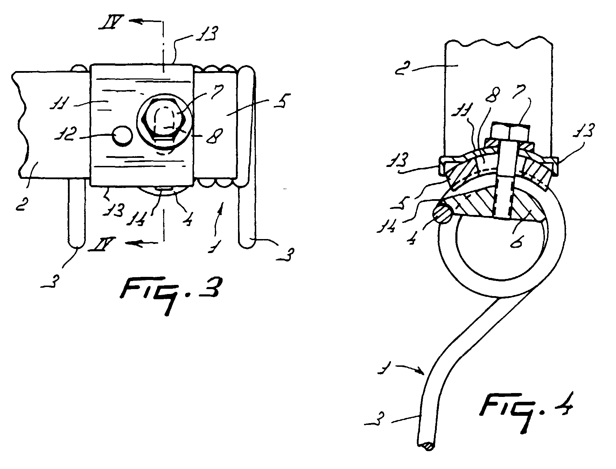

Figure 1 shows a working member 1 which is connected to an arm 2 of a hay making machine which is known per se, for example as disclosed in European patent application 0 273 531. The working member 1 comprises two tines 3 and is formed from a strip or a length of spring steel wire. Near its midway point, this length of wire is provided with two groups of round coils, between which, at the upper side of the coils, a U-shaped centre section of the working member is located. The base or point of this U-shaped centre section 4 is located, taken in the direction of motion A, at the rear side of the working member 1. The working member 1 is clamped against an arm section of the arm 2 with the aid of a clamping member 6 which acts on the bottom side of the U-shaped section 4. The clamping member 6 has a bore with thread, in which a bolt 7 engages, which is passed from the upper side through a slotted aperture 8 in the connecting member 5 of the arm 2. On tightening the bolt 7, to secure the working member 1 to the arm 2, the clamping member 6 pushes the legs of the U-shaped section into recesses 9 in the connecting member 5 of the arm.

As is shown in Figure 2, the arm section 5 is, at least at the bottom side, concave, more specifically in such a manner that the curvature matches at least approximately the curvature of the coils of the working member 1. The bolt 7 and a positioning element 11 are mentioned connecting means 11. A positioning element 11 is disposed between the head of the bolt 7 and the arm section 5. As is shown in Figure 3, the positioning element 11 is provided with a plurality of apertures 12, through one of which the bolt 7 is passed. The positioning element is slidable in the longitudinal direction of the arm portion 5, but is locked against sliding in the direction transversely thereto, i.e. in the direction of travel A, relative to the arm portion 5. To that end the positioning element 11 includes members 13 which are folded about the leading and the trailing edge of the connecting member 5. The apertures 12 are all disposed at a different distance from a centre line of the positioning element 11, which centre line is directed at a square angle to the tangent to the path A, through which the relevant working member 1 moves.

Figure 4 shows that the clamping member 6 is provided with a projection 14 which extends in a direction opposite to the direction A and constitutes a stop for the base of the U-shaped section 4 of the working member.

The mode of operation of the construction described above will now be described in detail hereinafter.

A working member as shown in Figures 1 - 4 is moved during operation of the hay-making implement about the shaft in a direction of rotation A. During this motion, the tines 3 of a working member 1 meet a resistance, inter alia due to the mass inertia of the crop residues to be moved, which causes a force to be exerted on the working members 1 in a direction opposite to the direction A. Via the coils which tend to wind up in response to this force, the force is taken up by an arm 2, 16, 31 via the restrained legs of the U-shaped portion 4 of the working member. Any distortion of the working member 1 may be caused by said force and the shock forces which act in a direction opposite thereto and which occur in response to coiling of the spring. Torsion of the legs of the U-shaped portion 4 between the clamping member 6 and the recesses 9 in an arm section 5, caused by these forces, are effectively counteracted in the present embodiment by the large surface by which the legs of the U-shaped portion 4 are restrained. The clamping area meant here is obtained by providing the entire width of the arm section 5, at least at the bottom side, with a curvature which follows the curvature of the legs of the U-shaped portion 4. The same holds for the clamping surface at the bottom side of the legs, that is to say for the pressure surface of the clamping member 6.

A further feature of the invention is embodied by the positioning element 11 which on mounting the hay making machine is important for adjusting the position of the working members 1. For the present hay making machine the active portion of a tine 3 which is part of the soil working member 1 requires to be adjusted to an aimed-at angle of 8° to a vertical line, the free end of a tine 3 being located behind this imaginary vertical relative to the direction of rotation A. If after having been connected, a working member 1 is not within the prescribed margins of this desired angle, the bolt 7, after having been loosened, can be inserted through another aperture 12 in the positioning element 1, which results in a backward readjustment of the working member 1 by two degrees. To obtain the correct position of the working members during mounting and to realize the said backward readjustment by two degrees, it is of importance that during tightening of the clamping bolt 7 the working member 1 is retained in such a manner that the base of the U-shaped portion 4 comes to bear against the stop 14, which is provided for this purpose, of the clamping member 6. If the position of a working member 1 does not arrive within the margins aimed at, it is possible, in accordance with the present embodiment, to slide the positioning element 11 in a radial direction from the arm 2 and to replace it in the reverse direction, so that, because of the asymmetrical location of the apertures 12, a choice can be made from a second range of positions for the working member 1. Consequently, the number of possible positions of a working member amounts in the present construction of the connection means to twice the number of apertures 12 in the positioning element 11.

The invention is not limited to the features described in the foregoing, but also relates to all the details shown in the drawings. The invention further relates to all kinds of alternatives in the construction, of course falling within the wording of the following claims.

## Claims

1. A hay making machine, comprising at least one carrier element which is rotatably drivable about an at least predominantly upwardly directed shaft and to which working members are attached via arms (2), each working member (1) being provided with a connecting member (4) which is secured to an arm section (5) with the aid of a clamping member (6), wherein the clamping member (6) is provided with a projection (14) which in cooperation with the connecting member (4) of the working member (1) counteracts in one direction any, displacement of the working member (1) transversely to the direction of the clamping force, characterized in that each working member (1) includes further connecting means (7, 11), with the aid of which the respective working member (1) can be adjusted to a finite number of positions relative to an arm section (5), the connecting means (7, 11) comprising a positioning element (11) provided with a plurality of apertures (12), which positioning element (11) relative to the arm section (5) is locked against sliding in or opposite to the direction of rotation of the carrier element, whereby each working member (1) can be adjusted in said finite number of positions with respect to the arm section (5).

2. A hay making machine as claimed in claim 1, characterized in that the positioning element (11) is locked in position with the aid of turned-over portions (13) which bear against the leading and the trailing edge of an arm section (5).

3. A hay making machine as claimed in claim 2, characterized in that the apertures (12) are arranged such in the positioning element (11) that when it is replaced through 180° about an upwardly extending axis, the number of possible positions of a working element (1) determined by the number of apertures (12), is doubled.

4. A hay making machine as claimed in one or more of the preceding claims, characterized in that the individual positions of a working member (1) differ by always approximately a fixed number of degrees relative to each other, this number being in the range from one to three degrees, preferably two degrees.

5. A hay making machine as claimed in one or more of the preceding claims, characterized in that the contour of the arm section (5) corresponds at least approximately to the contour of the coils of a working member (1).

6. A hay making machine as claimed in one or more of the preceding claims, characterized in that the arm section (5) is predominantly horizontal.

## Patentansprüche

1. Heuwerbungsmaschine mit mindestens einem Trägerelement, das um eine zumindest überwiegend aufwärts gerichtete Achse drehbar anzutreiben ist, und an dem über Arme (2) Bearbeitungsglieder angebracht sind, wobei jedes Bearbeitungsglied (1) ein Verbindungsglied (4) aufweist, das mit Hilfe eines Klemmgliedes (6) an einem Armteil (5) befestigt ist, wobei das Klemmglied (6) einen Vorsprung (14) aufweist, der im Zusammenwirken mit dem Verbindungsglied (4) des Bearbeitungsgliedes (1) einer etwaigen Verschiebung des Bearbeitungsgliedes (1) quer zur Richtung der Klemmkraft in einer Richtung entgegenwirkt,
dadurch gekennzeichnet, daß jedes Bearbeitungsglied (1) weitere Verbindungsvorrichtungen (7, 11) aufweist, mit deren Hilfe das jeweilige Bearbeitungsglied (1) in eine begrenzte Anzahl von Positionen relativ zu einem Armteil (5) einstellbar ist, wobei die Verbindungsvorrichtungen (7, 11) ein Positionierelement (11) mit mehreren Öffnungen (12) umfassen, wobei das Positionierelement (11) relativ zu dem Armteil (5) gegen Verschieben in oder entgegengesetzt zur Drehrichtung des Trägerelements festgelegt ist, und wobei jedes Bearbeitungsglied (1) in eine begrenzte Anzahl von Positionen relativ zu dem Armteil (5) einstellbar ist.

2. Heuwerbungsmaschine nach Anspruch 1,
dadurch gekennzeichnet, daß das Positionierelement (11) in seiner Position mit Hilfe von umgebogenen Teilen (13) festgelegt ist, die an der vorderen und der hinteren Kante eines Armteiles (5) anliegen.

3. Heuwerbungsmaschine nach Anspruch 2,
dadurch gekennzeichnet, daß die Öffnungen (12) in dem Positionierelement (11) derart angeordnet sind, daß sich die Anzahl der möglichen Positionen eines Bearbeitungsgliedes (1) beim Drehen um 180° um eine aufwärts gerichtete Achse verdoppelt.

4. Heuwerbungsmaschine nach einem oder mehreren der vorhergehenden Ansprüche,
dadurch gekennzeichnet, daß sich die einzelnen Positionen eines Bearbeitungsgliedes (1) um stets annähernd eine bestimmte Anzahl von Graden voneinander unterscheiden, wobei diese Anzahl im Bereich von ein bis drei Grad liegt und vorzugsweise zwei Grad beträgt.

5. Heuwerbungsmaschine nach einem oder mehreren der vorhergehenden Ansprüche,
dadurch gekennzeichnet, daß der Umriß des Armteiles (5) zumindest annähernd dem Umriß der Spiralen eines Bearbeitungsgliedes (1) entspricht.

6. Heuwerbungsmaschine nach einem oder mehreren der vorhergehenden Ansprüche,
dadurch gekennzeichnet, daß der Armteil (5) überwiegend horizontal ausgerichtet ist.

## Revendications

1. Machine à faner, comportant au moins un élément porteur qui peut être entraîné de manière rotative autour d'au moins un arbre dirigé de manière prédominante vers le haut et auquel sont reliés des éléments actifs via des bras (2), chaque élément actif(1) étant muni d'un élément de liaison (4) qui est fixé sur un tronçon de bras (5) à l'aide d'un élément de serrage (6), dans laquelle l'élément de serrage (6) est muni d'une saillie (14) qui, en coopération avec l'élément de liaison (4) de l'élément actif (1), contrecarre dans une direction un déplacement quelconque de l'élément actif (1) transversalement à la direction de la force de serrage, caractérisée en ce que chaque élément actif (1) comporte des moyens supplémentaires de liaison (7, 11) à l'aide desquels l'élément actif respectif (1) peut être ajusté à un nombre fini de positions par rapport à un tronçon de bras (5), les moyens de liaison (7, 11) comportant un élément de positionnement (11) muni d'une pluralité d'ouvertures (12), lequel élément de positionnement (11) est verrouillé à l'encontre d'un glissement par rapport au tronçon de bras (5) dans la direction de rotation de l'élément porteur ou dans la direction opposée, de sorte que chaque élément actif (1) peut être ajusté dans ledit nombre fini de positions par rapport au tronçon de bras (5).

2. Machine à faner selon la revendication 1, caractérisée en ce que l'élément de positionnement (11) est verrouillé en position à l'aide de parties retournées (13) qui s'appuient contre le bord avant et le bord arrière du tronçon de bras (5).

3. Machine à faner selon la revendication 2, caractérisée en ce que les ouvertures (12) sont situées dans l'élément de positionnement (11) de telle sorte que quand il est replacé par rotation de 180° autour d'un axe s'étendant vers le haut, le nombre de positions possibles d'un élément actif (1), déterminé par le nombre d'ouvertures (12), est doublé.

4. Machine à faner selon l'une quelconque des revendications précédentes, caractérisée en ce que les positions individuelles d'un élément actif (1) différent toujours approximativement d'un nombre fixe de degrés l'une par rapport à l'autre, ce nombre étant compris dans une plage allant de un à trois degrés, de préférence deux degrés.

5. Machine à faner selon l'une quelconque des revendications précédentes, caractérisée en ce que le contour du tronçon de bras (5) correspond au moins de manière approximative au contour des spires d'un élément actif (1).

6. Machine à faner selon l'une quelconque des revendications précédentes, caractérisée en ce que le tronçon de bras (5) est de manière prédominante horizontal.
